# EUROPEAN PATENT SPECIFICATION

(11) **EP 3 232 531 B1**
(45) Date of publication and mention of the grant of the patent: **01.01.2020**
(21) Application number: 15868538.8
(22) Date of filing: 27.11.2015
(51) Int. Cl.: H02J 7/00, H01M 10/44

(54) **APPARATUS AND METHOD FOR CONTROLLING BATTERY RACK RELAY**
VORRICHTUNG UND VERFAHREN ZUR STEUERUNG EINES BATTERIEGESTELLRELAIS
APPAREIL ET PROCÉDÉ DE COMMANDE DE RELAIS DE BÂTI DE BATTERIE

(30) Priority: 08.12.2014 KR 20140175006
(43) Date of publication of application: 18.10.2017
(73) Proprietor: LG Chem, Ltd., Seoul 07336 (KR)
(72) Inventor: PARK, Chunsoo, Daejeon 34122 (KR)
(74) Representative: Plasseraud IP
(86) International application number: PCT/KR2015/012858
(87) International publication number: WO 2016/093522

(56) References cited:
- EP-A1- 2 587 621
- EP-A2- 2 400 626
- JP-A- 2010 098 824
- JP-A- 2011 160 567
- KR-A- 20060 083 343
- KR-A- 20130 040 346
- US-A1- 2013 346 052

## Description

### [Technical Field]

The present invention relates to a device and a method for controlling a battery rack relay, and to a device and a method for controlling a battery rack relay, which measure plural battery rack voltages and set respective voltages as reference values, select a reference value to attach relays to most battery racks among the reference values of the plural battery rack voltages as a reference voltage value by performing a simulation, and control relays to be attached to the battery rack having the selected reference voltage value and a battery rack having a voltage value in which a difference from the reference voltage value is within a predetermined set value to stably operate a system by attaching the relays to a maximum of battery rack according to a situation regardless of a difference in voltage between the battery racks, and control the relay to be automatically attached to the battery rack to which the relay is not attached when the difference in voltage between the respective battery racks through charging or discharging decreases not to require a separate circuit breaker operation.

### [Background Art]

A battery having electrical characteristics including high applicability depending on a product group, high energy density, etc., is also referred to as a storage battery or a secondary battery, and has attracted public attentions as a new energy source for promoting an environmentally friendly property and energy efficiency in that no by-product is generated depending on use of energy in addition to a primary advantage that the amount of used fossil fuel may be reduced.

Therefore, the battery is universally applied in an electric vehicle (EV) driven by an electrical driving source or an energy storage system (ESS) in addition to a portable device, and in particular, the ESS comes to the fore as an efficient countermeasure for satisfying a power demand which becomes increasingly high.

Several to hundreds of battery racks are used in the ESS and the battery is charged and discharged through the relay. In this case, in order to prevent a current unbalance phenomenon by the difference in voltage between the battery racks, the battery is preferably charged and discharged based on an appropriate reference.

Herein, since in the device and the method for controlling a battery rack relay in the related art, charging and discharging are performed based on an average value of the battery rack voltage, when an excessive deviation occurs between the battery rack voltages due to replacement of the battery rack, etc., there is a problem in that a situation in which the relay is not attached to all battery racks may occur.

### [Detailed Description of the Invention]

### [Technical Problem]

An object of the present invention is to provide a device and a method for controlling a battery rack relay, which measure plural battery rack voltages and set respective voltages as reference values, select a reference value to attach relays to most battery racks among the reference values of the plural battery rack voltages as reference voltage values by performing a simulation, control relays to be attached to the battery rack having the selected reference voltage value and a battery rack having a voltage value in which a different from the reference voltage value is within a predetermined set value to stably operate a system by attaching the relays to a maximum of battery rack according to a situation regardless of a difference in voltage value between the battery racks, and control the relay to be automatically attached to the battery rack to which the relay is not attached when the difference in voltage value between the respective battery racks through charging or discharging decreases not to require a separate circuit breaker operation.

### [Technical Solution]

An embodiment of the present invention provides a device according to claim 1.

The control unit controls charging or discharging of the voltage of the battery rack to which the relay is attached by operating the relay to control the relay to be attached to the battery rack to which the relay is not attached when a difference between a voltage value of the battery rack to which the relay is attached and the voltage value of the battery rack to which the relay is not attached is within a predetermined second set value.

The relay may be connected to each of the plurality of battery racks and operate according to a signal of the control unit to charge or discharge the plurality of battery rack voltages.

The predetermined first set value may be an absolute value, 10 V.

Another embodiment of the present invention provides a method according to claim 5.

The controlling of the relays to be attached to the battery rack having the selected reference voltage value and the battery rack in which the difference from the reference voltage value has the voltage value within the predetermined first set value may include controlling charging or discharging of the voltage of the battery rack to which the relay is attached by operating the relay to control the relay to be attached to the battery rack to which the relay is not attached when a difference between a voltage value of the battery rack to which the relay is attached and the voltage value of the battery rack to which the relay is not attached is within a predetermined second set value.

The relay may be connected to each of the plurality of battery racks and operate according to a signal of the control unit to charge or discharge the plurality of battery rack voltages.

The predetermined first set value may be an absolute value, 10 V.

### [Advantageous Effects]

According to an aspect of the present invention, a device and a method for controlling a battery rack relay, which perform a simulation of selecting a reference voltage value among plural battery rack voltages and control a relay based on the reference voltage value to attach the relays to a maximum of battery racks and stably operate a system according to a situation regardless of a difference in voltage value between battery racks.

Further, when the difference in voltage value between the respective battery racks is reduced through charging or discharging, the relay is controlled to be automatically attached to the battery rack to which the relay is not attached, and as a result, a separate circuit breaker operation is not required.

### [Brief Description of Drawings]

FIG. 1 is a diagram schematically illustrated in order to describe a problem to be solved in the related art with respect to a device and a method for controlling a battery rack relay according to an embodiment of the present invention.
FIG. 2 is a diagram schematically illustrating the device for controlling a battery rack relay according to the embodiment of the present invention.
FIG. 3 is a diagram schematically illustrating a simulation of selecting a reference voltage value in the device and the method for controlling a battery rack relay according to the embodiment of the present invention.
FIG. 4 is a diagram schematically illustrating a relay operation of the device and the method for controlling a battery rack relay according to the embodiment of the present invention.
FIG. 5 is a flowchart for describing a method for controlling a battery rack relay according to an embodiment of the present invention.

### [Best Mode]

The present invention will be described below in detail with reference to the accompanying drawings. Herein, the repeated description and the detailed description of known function and configuration that may make the gist of the present invention unnecessarily ambiguous will be omitted.

Embodiments of the present invention will be provided for more completely describing the present invention to those skilled in the art. Accordingly, shapes, sizes, and the like of elements in the drawings may be exaggerated for clearer explanation.

Throughout the specification, unless explicitly described to the contrary, the word "comprise" and variations such as "comprises" or "comprising", will be understood to imply the inclusion of stated elements but not the exclusion of any other elements.

In addition, the term "unit" disclosed in the specification means a unit that processes at least one function or operation and this may be implemented by hardware or software or a combination of hardware and software.

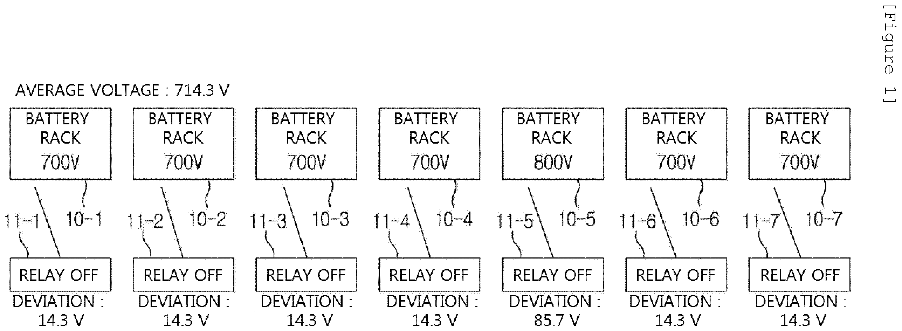

FIG. 1 is a diagram for describing a problem to be solved in the related art with respect to a device and a method for controlling a battery rack relay according to an embodiment of the present invention.

In FIG. 1, it may be assumed that a relay is controlled to be attached to a battery rack in which a difference from a reference voltage value has a voltage value within a predetermined set value and herein, the predetermined set value may be an absolute value, 10 V.

Referring to FIG. 1, for example, in the related art, an average of voltage values of battery racks 10-1 to 10-7 is set as a reference voltage value to control relays 11-1 to 11-7. In this case, the average of the voltage values of the battery racks 10-1 to 10-7 is 714.3 V, in the battery rack 10-5 having a voltage value of 800 V, a deviation of 85.7 V may be generated, in the battery racks 10-1 to 10-4, 10-6, and 10-7 having the voltage value of 700 V, the deviation of 14.3 V may be generated, and since the battery rack having the voltage value within the predetermined set value does not exist, a problem in that relays 11-1 to 11-n may not be attached may occur.

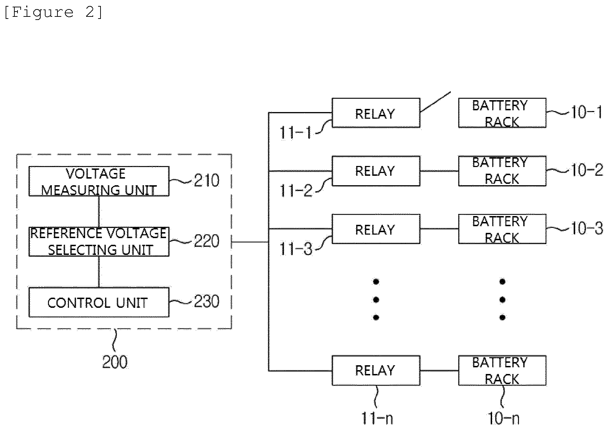

FIG. 2 is a diagram schematically illustrating the device 200 for controlling a battery rack relay according to the embodiment of the present invention.

Referring to FIG. 2, the device 200 for controlling a battery rack relay according to the embodiment of the present invention may be configured to include a voltage measuring unit 210, a reference voltage selecting unit 220, and a control unit 230. However, the battery rack relay controlling device 200 illustrated in FIG. 2 follows the embodiment, and it should be noted that constituent elements thereof are not limited to the embodiment illustrated in FIG. 2 and as necessary, some constituent elements may be added, modified, or deleted.

Further, the battery rack relay controlling device 200 illustrated in FIG. 2 selectively connects the relays 11-1 to 11-n and the battery racks 10-1 to 10-n to measure, collect, and control voltages of the battery racks 10-1 to 10-n. In this case, the battery racks 10-1 to 10-n may include a plurality of battery cells and the battery racks 10-1 to 10-n may be connected to each other in series or in parallel.

The voltage measuring unit 210 may measure the voltages of the battery racks 10-1 to 10-n and since a known technology in the related art is used, a detailed description will be omitted.

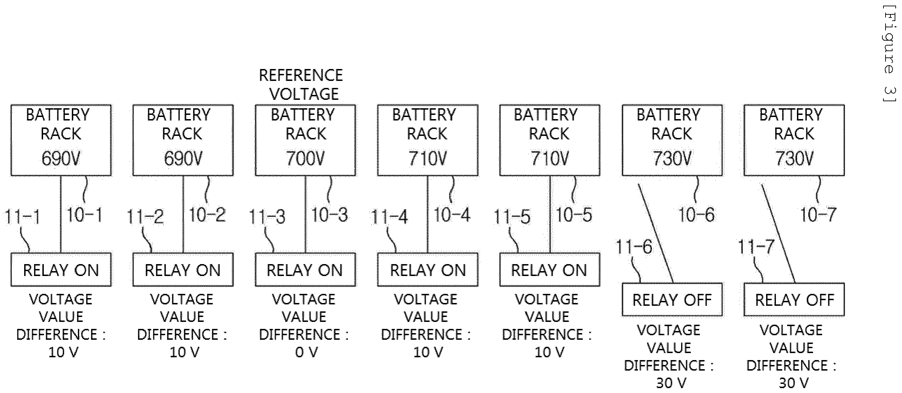

The reference voltage selecting unit 220 performs a simulation having the respective voltages of the plurality of battery racks as reference values based on the voltages of the plurality of battery racks, which is measured by the voltage measuring unit 210 to select a reference voltage value among the reference values of the plurality of respective battery rack voltages. The simulation of selecting the reference voltage will be described in more detail in FIG. 3 to be described below.

FIG. 3 is a diagram schematically illustrating a simulation of selecting a reference voltage value in the device and the method for controlling a battery rack relay according to the embodiment of the present invention.

Referring to FIG. 3, for example, when 690 V is selected as the reference voltage value, three battery racks 10-1 to 10-3 in which the difference from the reference voltage value has a voltage value within a predetermined first set value may exist, when 710 V is selected as the reference voltage value, three battery racks 10-3 to 10-5 in which the difference from the reference voltage value has the voltage value within the predetermined first set value may exist, and when 730 V is selected as the reference voltage value, two battery racks 10-6 and 10-7 in which the difference from the reference voltage value has the voltage value within the predetermined first set value may exist. Herein, when 700 V is selected as the reference voltage value, since five battery racks 10-1 to 10-5 in which the difference from the reference voltage value has the voltage value within the predetermined first set value may exist, 700 V to attach the relay to most battery racks may be selected as the reference voltage value.

Referring back to FIG. 2, the control unit 230 operates the relays 11-1 to 11-n to be attached to the battery rack having the reference voltage value and the battery rack in which the difference from the reference voltage value has the voltage value within the predetermined first set value to control charging or discharging the battery racks 10-1 to 10-n. Herein, the predetermined first set value may be the absolute value, 10 V.

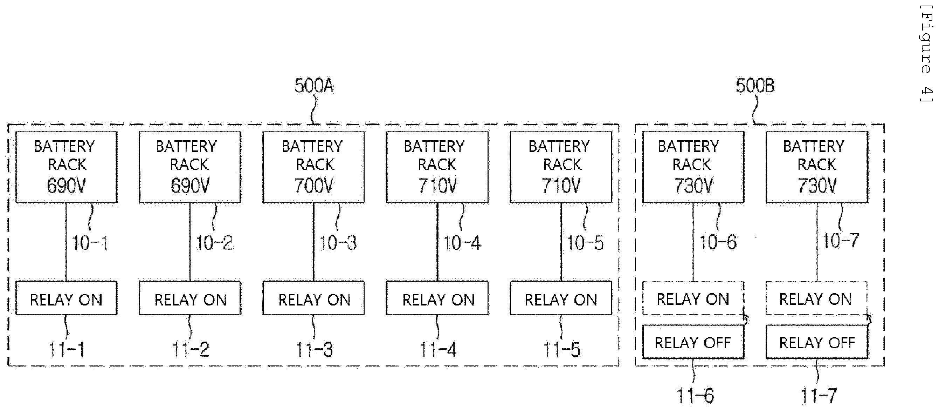

Further, the control unit 230 may control the relay 11-1 to be attached to the battery rack 10-1 to which the relay is not attached when differences between the voltage values of the battery racks 10-2 to 10-n to which the relays are attached and the voltage value of the battery rack 10-1 to which the relay is not attached are within a predetermined second set value. A process of controlling the relay 11-1 to be attached to the battery rack 10-1 to which the relay is not attached will be described in more detail in FIG. 4.

FIG. 4 is a diagram schematically illustrating operations of relays 11-1 to 11-7 of the device and the method for controlling a battery rack relay according to the embodiment of the present invention.

Referring to FIG. 4, the voltage of a battery rack group 500A to which the relays 11-1 to 11-5 are attached is charged or discharged and when the voltage value of the battery rack group 500A to which the relays 11-1 to 11-5 are attached and the voltage value of a battery rack group 500B to which the relays 11-6 and 11-7 are not attached are within the predetermined second set value, the relays 11-6 and 11-7 of the battery rack group 500B to which the relays 11-6 and 11-7 are not attached may be attached to the battery racks 10-6 and 10-7.

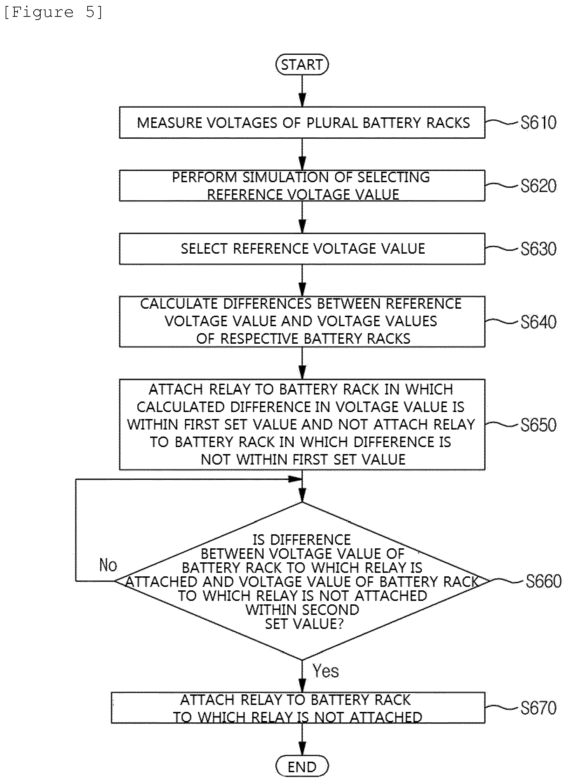

FIG. 5 is a flowchart for describing a method for controlling a battery rack relay according to an embodiment of the present invention.

Referring to FIG. 5, when the battery rack relay controlling method according to the embodiment of the present invention starts, first, a plurality of battery rack voltages is measured (S610) and a simulation of selecting a reference voltage value is performed based on the plurality of measured battery rack voltages (S620). When the reference voltage value is selected (S630), differences between the reference voltage value and respective battery rack voltage values are calculated (S640) to control a relay to be attached to a battery rack in which the difference from the calculated voltage values are within a first set value and control the relay not to be attached to a battery rack in which the calculated voltage value differences are not within the first set value (S650). When the difference between the voltage value of the battery rack to which the relay is attached and the voltage value of the battery rack to which the relay is not attached is not within a second set value, the process returns to a step of determining the difference between the voltage value of the battery rack to which the relay is attached and the voltage value of the battery rack to which the relay is not attached and when the difference is within the second set value, the relay is attached to the battery rack to which the relay is not attached and a battery rack relay control ends.

Hereinabove, a specific embodiment of the present invention has been illustrated and described, but the technical spirit of the present invention is not limited to the accompanying drawings and the described contents.

## Claims

1. A device for controlling a battery rack relay, the device comprising:
a voltage measuring unit adapted to measure battery rack voltages of a plurality of battery racks;
a reference voltage selecting unit adapted to perform a simulation which uses the measured battery rack voltages in order to select one of the measured battery rack voltages as reference value; and
a control unit adapted to control relays to be attached to a battery rack having the selected reference voltage value and a battery rack in which a difference from the reference voltage value has a voltage value falling below a predetermined first set value,
wherein, as a result of the simulation, the reference voltage selecting unit selects that of the measured battery rack voltages as the reference value which effects that a maximum number of relays are attached to corresponding battery racks.

2. The device for controlling a battery rack relay of claim 1, wherein the control unit controls charging or discharging of the voltage of the battery rack to which the relay is attached by operating the relay to control the relay to be attached to the battery rack to which the relay is not attached when a difference between a voltage value of the battery rack to which the relay is attached and the voltage value of the battery rack to which the relay is not attached is within a predetermined second set value.

3. The device for controlling a battery rack relay of claim 2, wherein the relay is connected to each of the plurality of battery racks and operates according to a signal of the control unit to charge or discharge the plurality of battery rack voltages.

4. The device for controlling a battery rack relay of claim 1, wherein the predetermined first set value is an absolute value, 10 V.

5. A method for controlling a battery rack relay, the method comprising:
measuring battery rack voltages of a plurality of battery racks;
performing a simulation which uses the measured battery rack voltages and select one of the measured battery rack voltages as reference value; and
controlling relays to be attached to a battery rack having the selected reference voltage value and a battery rack in which a difference from the reference voltage value has a voltage value falling below a predetermined first set value, wherein, as a result of the simulation, selecting that of the measured battery rack voltages as the reference value which effects that a maximum number of relays are attached to corresponding battery racks.

6. The method for controlling a battery rack relay of claim 5, wherein in the controlling of the relays to be attached to the battery rack having the selected reference voltage value and the battery rack in which the difference from the reference voltage value has the voltage value within the predetermined first set value,
charging or discharging of the voltage of the battery rack to which the relay is attached is controlled by operating the relay to control the relay to be attached to the battery rack to which the relay is not attached when a difference between a voltage value of the battery rack to which the relay is attached and the voltage value of the battery rack to which the relay is not attached is within a predetermined second set value.

7. The method for controlling a battery rack relay of claim 6, wherein the relay is connected to each of the plurality of battery racks and operates according to a signal of the control unit to charge or discharge the plurality of battery rack voltages.

8. The method for controlling a battery rack relay of claim 5, wherein the predetermined first set value is an absolute value, 10 V.

## Patentansprüche

1. Vorrichtung zum Steuern eines Batteriegestell-Relais, wobei die Vorrichtung umfasst:
eine Spannungsmesseinheit, welche dazu eingerichtet ist,
Batteriegestell-Spannungen einer Mehrzahl von Batteriegestellen zu messen;
eine Referenzspannung-Auswahl-Einheit, welche dazu eingerichtet ist, eine Simulation durchzuführen, welche die gemessenen Batteriegestell-Spannungen verwendet, um eine der gemessenen Batteriegestell-Spannungen als einen Referenzwert auszuwählen; und
eine Steuereinheit, welche dazu eingerichtet ist, Relais zu steuern, welche an einem Batteriegestell, welches den ausgewählten Referenzspannungswert aufweist, und einem Batteriegestell anzubringen sind, in welchem eine Differenz von dem Referenzspannungswert einen Spannungswert aufweist, welcher unter einen vorbestimmten ersten festgelegten Wert fällt, wobei, als ein Ergebnis der Simulation, die Referenzspannung-Auswahl-Einheit diejenige aus den gemessenen Batteriegestell-Spannungen als den Referenzwert auswählt, welcher den Effekt hat, dass eine maximale Anzahl von Relais an entsprechenden Batteriegestellen angebracht sind.

2. Vorrichtung zum Steuern eines Batteriegestell-Relais nach Anspruch 1, wobei die Steuereinheit ein Laden oder Entladen der Spannung des Batteriegestells steuert, an welchem das Relais angebracht ist, durch Betreiben des Relais, um das Relais zu steuern, an dem Batteriegestell angebracht zu werden, an welchem das Relais nicht angebracht ist, wenn eine Differenz zwischen einem Spannungswert des Batteriegestells, an welchem das Relais angebracht ist, und dem Spannungswert des Batteriegestells, an welchem das Relais nicht angebracht ist, innerhalb eines vorbestimmten zweiten festgelegten Werts ist.

3. Vorrichtung zum Steuern eines Batteriegestell-Relais nach Anspruch 2, wobei das Relais mit jedem aus der Mehrzahl von Batteriegestellen verbunden ist und gemäß einem Signal der Steuereinheit arbeitet, um die Mehrzahl von Batteriegestell-Spannungen zu laden oder zu entladen.

4. Vorrichtung zum Steuern eines Batteriegestell-Relais nach Anspruch 1, wobei der vorbestimmte erste festgelegte Wert ein absoluter Wert ist, 10 V.

5. Verfahren zum Steuern eines Batteriegestell-Relais, wobei das Verfahren umfasst:
Messen von Batteriegestell-Spannungen einer Mehrzahl von Batteriegestellen;
Durchführen einer Simulation, welche die gemessenen Batteriegestell-Spannungen verwendet und eine der gemessenen Batteriegestell-Spannungen als einen Referenzwert auswählt; und
Steuern von Relais, welche an ein Batteriegestell, welches den ausgewählten Referenzspannungswert aufweist, und ein Batteriegestell anzubringen sind, in welchem eine Differenz von dem Referenzspannungswert einen Spannungswert aufweist, welcher unter einen vorbestimmten ersten festgelegten Wert fällt, wobei, als ein Ergebnis der Simulation, Auswählen derjenigen der gemessenen Batteriegestell-Spannungen als den Referenzwert, welcher den Effekt hat, dass eine maximale Anzahl von Relais an entsprechenden Batteriegestellen angebracht werden.

6. Verfahren zum Steuern eines Batteriegestell-Relais nach Anspruch 5, wobei in dem Steuern der Relais, welche an dem Batteriegestell, welches den ausgewählten Referenzspannungswert aufweist, und dem Batteriegestell anzubringen sind, in welchem die Differenz von dem Referenzspannungswert den Spannungswert innerhalb des vorbestimmten ersten festgelegten Werts aufweist,
ein Laden oder Entladen der Spannung des Batteriegestells, an welchem das Relais angebracht ist, durch ein Betreiben des Relais gesteuert wird, um das Relais zu steuern, welches an dem Batteriegestell anzubringen ist, an welchem das Relais nicht angebracht ist, wenn eine Differenz zwischen einem Spannungswert des Batteriegestells, an welchem das Relais angebracht ist, und dem Spannungswert des Batteriegestells, an welchem das Relais nicht angebracht ist, innerhalb eines vorbestimmten zweiten festgelegten Werts ist.

7. Verfahren zum Steuern eines Batteriegestell-Relais nach Anspruch 6, wobei das Relais mit jedem aus der Mehrzahl der Batteriegestelle verbunden ist und gemäß einem Signal der Steuereinheit arbeitet, um die Mehrzahl von Batteriegestell-Spannungen zu laden oder zu entladen.

8. Verfahren zum Steuern eines Batteriegestell-Relais nach Anspruch 5, wobei der vorbestimmte erste festgelegte Wert ein absoluter Wert ist, 10 V.

## Revendications

1. Dispositif de commande d'un relais de bâti de batterie, le dispositif comprenant :
une unité de mesure de tension adaptée pour mesurer des tensions de bâti de batterie d'une pluralité de bâtis de batterie ;
une unité de sélection de tension de référence adaptée pour réaliser une simulation qui utilise les tensions de bâti de batterie mesurées afin de sélectionner l'une des tensions de bâti de batterie mesurées en tant que valeur de référence ; et
une unité de commande adaptée pour commander des relais à fixer à un bâti de batterie ayant la valeur de tension de référence sélectionnée et un bâti de batterie dans lequel une différence par rapport à la valeur de tension de référence a une valeur de tension descendant en dessous d'une première valeur de consigne prédéterminée,
dans lequel, suite à la simulation, l'unité de sélection de tension de référence sélectionne celle des tensions de bâti de batterie mesurées en tant que valeur de référence qui a pour effet qu'un nombre maximal de relais sont fixés à des bâtis de batterie correspondants.

2. Dispositif de commande d'un relais de bâti de batterie selon la revendication 1, dans lequel l'unité de commande commande la charge ou la décharge de la tension du bâti de batterie auquel le relais est fixé en faisant fonctionner le relais pour commander le relais à fixer au bâti de batterie auquel le relais n'est pas fixé lorsqu'une différence entre une valeur de tension du bâti de batterie auquel le relais est fixé et la valeur de tension du bâti de batterie auquel le relais n'est pas fixé est dans des limites d'une seconde valeur de consigne prédéterminée.

3. Dispositif de commande d'un relais de bâti de batterie selon la revendication 2, dans lequel le relais est connecté à chacun de la pluralité de bâtis de batterie et fonctionne selon un signal de l'unité de commande pour charger ou décharger la pluralité de tensions de bâti de batterie.

4. Dispositif de commande d'un relais de bâti de batterie selon la revendication 1, dans lequel la première valeur de consigne prédéterminée est une valeur absolue, 10 V.

5. Procédé de commande d'un relais de bâti de batterie, le procédé comprenant :
la mesure de tensions de bâti de batterie d'une pluralité de bâtis de batterie ;
la réalisation d'une simulation qui utilise les tensions de bâti de batterie mesurées et sélectionne l'une des tensions de bâti de batterie mesurées en tant que valeur de référence ; et
la commande de relais à fixer à un bâti de batterie ayant la valeur de tension de référence sélectionnée et un bâti de batterie dans lequel une différence par rapport à la valeur de tension de référence a une valeur de tension descendant en dessous d'une première valeur de consigne prédéterminée, dans lequel, suite à la simulation, la sélection de celle des tensions de bâti de batterie mesurées en tant que valeur de référence qui a pour effet qu'un nombre maximal de relais sont fixés à des bâtis de batterie correspondants.

6. Procédé de commande d'un relais de bâti de batterie selon la revendication 5, dans lequel dans la commande des relais à fixer au bâti de batterie ayant la valeur de tension de référence sélectionnée et au bâti de batterie dans lequel la différence par rapport à la valeur de tension de référence a la valeur de tension dans les limites de la première valeur de consigne prédéterminée,
la charge ou la décharge de la tension du bâti de batterie auquel le relais est fixé est commandée en faisant fonctionner le relais pour commander le relais à fixer au bâti de batterie auquel le relais n'est pas fixé lorsqu'une différence entre une valeur de tension du bâti de batterie auquel le relais est fixé et la valeur de tension du bâti de batterie auquel le relais n'est pas fixé est dans des limites d'une seconde valeur de consigne prédéterminée.

7. Procédé de commande d'un relais de bâti de batterie selon la revendication 6, dans lequel le relais est connecté à chacun de la pluralité de bâtis de batterie et fonctionne selon un signal de l'unité de commande pour charger ou décharger la pluralité de tensions de bâti de batterie.

8. Procédé de commande d'un relais de bâti de batterie selon la revendication 5, dans lequel la première valeur de consigne prédéterminée est une valeur absolue, 10 V.
